# FASCICULE DE BREVET EUROPEEN

(11) **EP 3 150 453 B1**
(45) Date de publication et mention de la délivrance du brevet: **25.01.2023**
(21) Numéro de dépôt: 16176404.8
(22) Date de dépôt: 27.06.2016
(51) Int. Cl.: B60W 20/16, B60W 10/26

(54) **PROCÉDÉ DE RÉPARTITION D'UNE CONSIGNE D'ASSISTANCE DE COUPLE D'UNE FONCTION DE DÉPOLLUTION THERMIQUE POUR UN VÉHICULE HYBRIDE**
VERFAHREN ZUR VERTEILUNG EINES SOLLWERTS EINES DREHMOMENTS EINER THERMISCHEN ENTGIFTUNGSFUNKTION FÜR EIN HYBRIDFAHRZEUG
METHOD FOR DISTRIBUTING A TORQUE-ASSIST INSTRUCTION OF A THERMAL POLLUTION-CONTROL FUNCTION OF A HYBRID VEHICLE

(30) Priorité: 17.08.2015 FR 1557766
(43) Date de publication de la demande: 05.04.2017
(73) Titulaire: PSA Automobiles SA, 78300 Poissy (FR)
(72) Inventeur: MILHAU, Yohan, 78400 CHATOU (FR); PLANTIER, Matthieu, 78420 CARRIERES SUR SEINE (FR)

(56) Documents cités:
- EP-A1- 2 676 855
- WO-A1-2009/119397
- WO-A1-2014/174551
- WO-A1-2015/113418
- FR-A1- 2 982 317
- JP-A- 2007 204 004
- US-A1- 2012 303 200

## Description

Le domaine de l'invention concerne un procédé de répartition d'une consigne d'assistance de couple de dépollution à destination d'une traction alternative d'un groupe motopropulseur hybride d'un véhicule automobile.

Les véhicules hybrides comprennent le plus souvent un moteur thermique et une ou plusieurs machines électriques participant à la traction électrique ainsi qu'à la recharge d'un accumulateur électrique. Ces véhicules comprennent un superviseur dont le rôle est de coordonner le moteur thermique et les machines électriques pour offrir diverses prestations de roulage selon la volonté du conducteur. Dans un mode de roulage économique, le superviseur pilote les équipements du groupe motopropulseur afin de réduire la consommation thermique et de privilégier la traction électrique et les phases de récupération d'énergie. Toutefois, le conducteur peut aussi configurer le comportement du véhicule pour privilégier les performances de conduite. Dans ce dernier mode, le superviseur calcule les consignes de couples des machines électriques et du moteur thermique de sorte à répondre aux fortes dynamiques de la consigne conducteur.

Par exemple, on connaît de l'état de la technique le document US20060048516A1 décrivant un groupe motopropulseur hybride comprenant deux machines électriques. Ce document divulgue un procédé de répartition des consignes de couples entre les machines électriques et le moteur thermique pour garantir un mode de roulage sportif et un état de charge suffisant de l'accumulateur électrique. On connaît également le document US20110213519A1 décrivant un groupe motopropulseur hybride ayant deux machines électriques et proposant une méthode de pilotage pour réduire la consommation de carburant. La méthode vise à déterminer plusieurs lois de répartition des couples et à sélectionner celle qui implique la consommation de carburant la plus faible.

On connaît en outre du document de brevet EP-A1-2676855 un procédé conforme au préambule de la revendication 1.

Ces documents décrivent des solutions de répartitions de couple entre les machines électriques et le moteur thermique pour réduire la consommation de carburant mais ne traite pas précisément la problématique de réduction des gaz polluants.

Un objectif de l'invention est de réduire l'émission de gaz polluants du véhicule au moyen d'une fonction de dépollution du superviseur prenant en compte l'état du système de traitement des polluants générés par le moteur thermique. Un autre objectif vise à garantir l'opération d'un couple d'assistance au couple de la traction thermique, ce dernier étant contraint par la fonction de dépollution.

Plus précisément, l'invention concerne un procédé de répartition d'une consigne d'assistance de couple pour un groupe motopropulseur hybride d'un véhicule automobile calculée par une fonction de dépollution pour assister le couple opéré par un moteur thermique de traction lorsqu'il est contraint par la fonction de dépollution. La consigne d'assistance est opérée par une machine de traction lorsqu'elle est positive, et lorsqu'elle est négative, la consigne d'assistance impose une limite de récupération d'énergie à une consigne de récupération pouvant être opérée au moins par un générateur électrique attelé au moteur thermique. Selon l'invention, la machine de traction est montée sur un premier train de roues du véhicule tandis que le moteur thermique et le générateur sont montés sur un deuxième train de roues, indépendant mécaniquement du premier train de roue, et lorsque la consigne d'assistance est négative et si la consigne de récupération est opérée partiellement par la machine de traction et partiellement par le générateur, les proportions de la répartition de la consigne de récupération entre la machine de traction et le générateur calculées par la fonction de dépollution sont limitées par une fonction de répartition de couple entre les premier et deuxième trains.

Dans une variante, lorsque la consigne d'assistance est négative et la consigne de récupération dépasse un potentiel de récupération de couple du générateur électrique, la quantité de couple résiduel de récupération dépassant le potentiel de récupération est opéré par la machine de traction.

Dans une variante, la consigne d'assistance est entièrement opérée par la machine de traction lorsqu'elle est positive.

Plus précisément, la consigne d'assistance est calculée au moins en fonction de paramètres d'état d'un système de traitement des polluants générés par le moteur thermique.

Dans une variante, la machine de traction est une machine électrique réversible.

Il est prévu selon l'invention, un véhicule automobile comprenant un groupe motopropulseur hybride piloté par un superviseur apte à opérer une fonction de dépollution commandant une consigne d'assistance de couple calculée par la fonction de dépollution pour assister le couple opéré par un moteur thermique de traction lorsqu'il est contraint par la fonction de dépollution. Selon l'invention, le superviseur exécute le procédé de répartition de la consigne d'assistance de couple selon l'une quelconque des variantes précédentes lorsque le couple du moteur thermique est contraint par la fonction de dépollution.

Grâce à l'invention, la fonction de dépollution est assistée par la machine de traction alternative et le générateur électrique attelé au moteur thermique. Le procédé de répartition permet une marge de manoeuvre suffisamment importante grâce à la machine de traction alternative et le générateur électrique pour assister le couple du moteur thermique lorsqu'il est contraint par la fonction de dépollution.

Grâce à l'invention, les choix de tenue de route et du mode de roulage du véhicule hybride sont respectés grâce au potentiel de mise en opération de la consigne d'assistance.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un groupe motopropulseur hybride pour la mise en oeuvre du procédé de répartition de la consigne d'assistance comprenant un moteur thermique et deux machines électriques ;
- la figure 2 représente le superviseur de contrôle du groupe motopropulseur et les fonctions de répartitions du couple de la traction électrique pour la mise en oeuvre du procédé de répartition ;
- la figure 3 représente une situation de roulage, sur un premier axe la consigne d'assistance et sur un deuxième axe la répartition de cette consigne de couple à destination des machines électriques.

L'invention concerne les véhicules hybrides comprenant une traction thermique et une traction électrique disposées sur des premier et deuxième trains de roulage respectivement. Elle s'applique particulièrement aux véhicules hybrides à quatre roues motrices. Le procédé de répartition de la consigne d'assistance s'applique également aux véhicules électriques dont l'accumulateur d'énergie est rechargeable sur le secteur (« Plugin » en anglais), ainsi qu'aux véhicules à groupe motopropulseur hybride hydraulique comprenant un moteur thermique et une machine de traction hydraulique.

Le procédé de répartition vise à proposer solution de répartition d'une consigne d'assistance de couple entre des équipements de motorisation alternatifs au moteur thermique du groupe motopropulseur lorsque le moteur thermique est contraint par une fonction de dépollution. Dans l'exemple qui suit, la répartition de la consigne d'assistance est opérée entre une machine de traction électrique et un générateur électrique attelé sur le moteur thermique de traction.

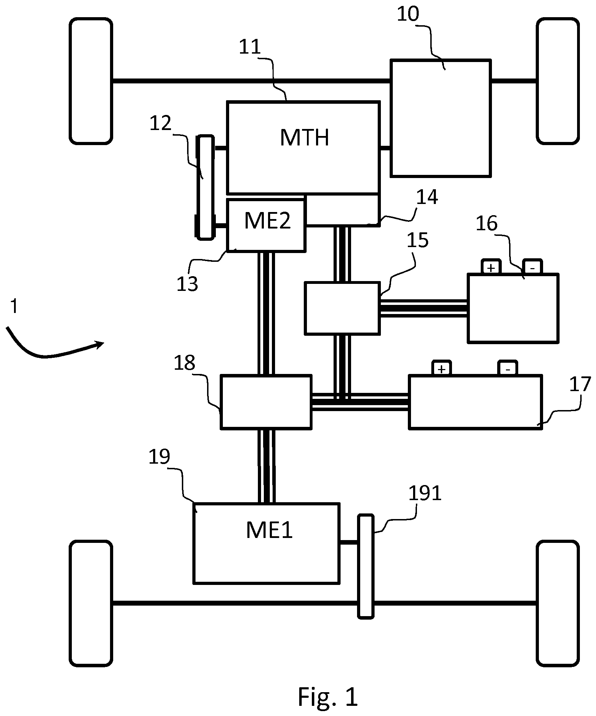

La figure 1 représente une architecture du groupe motopropulseur hybride 1 pouvant mettre en oeuvre le procédé de répartition de la consigne d'assistance. Dans ce mode de réalisation, le groupe motopropulseur hybride comprend un premier train de roues avant tracté par un moteur thermique 11 et une deuxième train de roue arrière tracté par une machine de traction électrique. Le groupe motopropulseur est motorisé par un train de roues avant et un train de roues arrière.

Le train de roues avant est tracté par le moteur thermique 11 relié à une boite de vitesses 10 effectuant la transmission aux roues avec le moteur thermique 11. Dans le référentiel du vilebrequin du moteur thermique, on notera que le moteur thermique peut fournir un couple positif aux roues (correspondant à une accélération du véhicule) et un couple négatif aux roues (correspondant à une décélération). Le moteur thermique 11 est apte à entrainer un générateur électrique 13 au moyen d'un dispositif de transmission 12, par exemple une courroie ou un dispositif de couplage.

Le générateur électrique 13 est destiné à fournir de l'énergie électrique à un ou des accumulateurs électriques du groupe motopropulseur. En fonctionnement de générateur, le générateur électrique 13 est entrainé par le moteur thermique 11 et est piloté en couple négatif pour opérer un couple de prélèvement. Il est envisageable dans certaines situations de roulage que le générateur soit réversible et fonctionne comme un moteur électrique, par exemple au démarrage du véhicule. Un démarreur 14 permet également de fournir une assistance au démarrage au moteur thermique 11.

Le générateur électrique est limité par un seuil de récupération d'énergie composé de la limite organique du générateur électrique et de la limite de la façade accessoire du moteur thermique. On notera que pour le fonctionnement du réseau de bord, un couple de prélèvement est constamment opéré et en priorité. Il existe donc un potentiel de récupération correspondant à la différence entre le seuil de récupération et le couple de prélèvement pour le besoin du réseau de bord.

Le groupe motopropulseur 1 comprend également une machine de traction 19 attelée au train arrière. Une transmission comprenant un dispositif de couplage 191 relie mécaniquement la machine de traction aux roues du train arrière. La machine de traction 19 est une machine électrique réversible qui, dans le référentiel de son rotor, peut fournir un couple positif aux roues (correspondant à une accélération du véhicule) ou un couple négatif aux roues (correspondant à une décélération du véhicule et une phase opportune pour opérer une récupération d'énergie cinétique). Lors d'une récupération d'énergie, l'énergie cinétique est transformée en énergie électrique qui est conservée dans l'accumulateur électrique 17.

On notera que le train arrière tracté par la machine de traction électrique 19 et le train avant tracté par le moteur thermique 11 sont mécaniquement indépendants.

Dans une variante, la machine de traction peut être une machine hydraulique réversible alimentée par un accumulateur d'énergie hydraulique. Dans une autre variante, la machine de traction, électrique ou hydraulique, est montée sur le train avant. Les roues du train avant sont alors reliée mécaniquement à la machine de traction alternative et au moteur thermique via un dispositif de couplage permettant la fourniture de couple da façon indépendante par le moteur thermique d'une part et par la machine de traction alternative d'autre part. Le dispositif de couplage est par exemple un train épicycloïdal.

L'accumulateur électrique 17 est connecté à un réseau électrique basse tension, sur lequel le générateur électrique 13 et la machine de traction électrique 19 sont connectées via un onduleur 18. Le générateur 13 et la machine de traction électrique 19 peuvent ainsi rechargé l'accumulateur 17. Un convertisseur de tension 15 est connecté au réseau basse tension d'une part, et à un réseau très basse tension d'autre part. Le réseau très basse tension alimente un deuxième accumulateur électrique 16, le réseau de bord et le démarreur. On notera que le réseau très basse tension est principalement alimenté par le générateur électrique 13 en opérant le couple de prélèvement sur le couple du moteur thermique 11. Ce couple de prélèvement est destiné à maintenir un niveau d'énergie suffisant dans l'accumulateur 16 et à garantir le bon fonctionnement du réseau de bord.

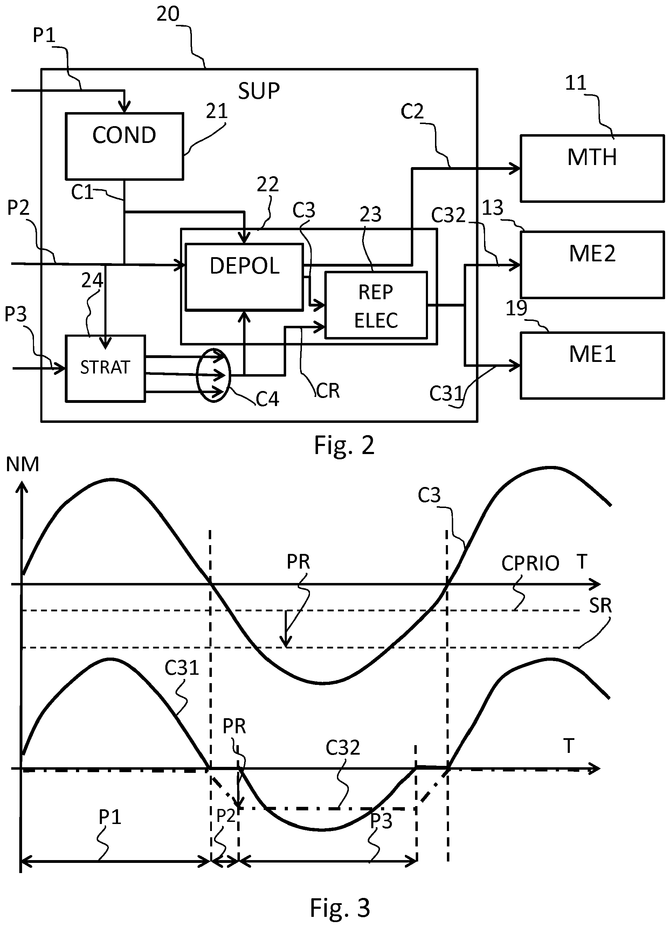

La figure 2 représente le calculateur de supervision (non représenté sur la figure 1) du groupe motopropulseur 1. Le superviseur coordonne le pilotage des équipements décrit précédemment pour le bon fonctionnement du véhicule, les divers modes de roulage (tout électrique, récupération d'énergie, mode sportif ou mode économe en énergie), les fonctions de stratégie énergétique et de répartition de couple sur le train avant et train arrière et les fonctions de calcul des consignes de couple du moteur thermique 11, du générateur électrique 13 et de la machine de traction 19.

Le superviseur est un calculateur de contrôle à microprocesseur ou logique de contrôle. Ses fonctions peuvent être opérées par un calculateur dans une architecture de calculs centralisés ou plusieurs calculateurs déportés. A partir de paramètres de roulage issus des équipements de motorisation (capteurs de moteur, boite de vitesses, équipements de traitement de dépollution etc...) le calculateur de supervision opère des fonctions de pilotage du groupe motopropulseur.

En particulier dans le cadre de l'invention, le superviseur 20 comprend une fonction dite fonction de dépollution 22 dont l'objet est, d'une part, d'ajuster la consigne de couple du moteur thermique 11 en fonction de l'état d'un dispositif de traitement des gaz polluants émis par le moteur thermique et, d'autre part, de calculer une consigne de couple d'assistance au moteur thermique 11. La fonction de dépollution 22 permet ainsi de réduire l'émission des gaz polluants par un asservissement du moteur thermique en fonction d'au moins des paramètres d'état P2 du dispositif de traitement des gaz polluants.

La fonction de dépollution 22 calcule une consigne de couple moteur thermique C2 ajustée pour réduire l'émission de gaz polluants. Le couple du moteur thermique est limité à une valeur permettant de trouver un compromis optimal entre la consommation et la pollution de la traction thermique. La calcul de la consigne C2 de couple moteur ajustée est dépendant notamment de la consigne conducteur C1, issue d'une fonction traduisant la volonté du conducteur en une consigne de couple aux roues, de paramètres de roulage P2 comprenant au moins les paramètres d'état du dispositif de traitement des gaz polluants et de consignes de couples C4 issues des fonctions de stratégie énergétiques. D'autres paramètres peuvent être pris en compte par exemple, le mode de roulage sélectionné, des paramètres du moteur thermique, température, etc....

De plus, la fonction de dépollution 22 calcule également une consigne d'assistance C3 opérée soit par la machine de traction 19, soit par le générateur électrique 13 ou soit les deux à la fois, en fonction du signe (positif ou négatif) de la consigne de couple d'assistance C3. La consigne d'assistance C3 permet de compenser l'ajustement imposé par la fonction de dépollution 22 sur la consigne de couple du moteur thermique ou de limiter la compensation de couple (dans la situation d'une consigne de récupération d'énergie) résultant d'une fonction de stratégie énergétique 24. La consigne d'assistance C3 est calculée en fonction de la consigne du couple du moteur thermique C2, des paramètres de roulage P2 et des consignes de couples C4 issues des fonctions de stratégie énergétique (répartition de couple par exemple).

Par ailleurs, le superviseur 20 comprend des fonctions 24 dites de stratégie énergétique déterminant notamment la répartition du couple aux roues entre le train avant et le train arrière, et donc entre le moteur thermique de traction 11 et le générateur électrique 13 montés sur le train avant d'une part, et la machine de traction 19 montée sur le train arrière d'autre part. Des consignes de couples C4 sont calculées pour la commande desdits équipements 11, 13, 19 du groupe motopropulseur. Ces fonctions de stratégie énergétique dépendent notamment de la consigne aux roues C1, issue de la volonté du conducteur, et de paramètres de roulage P3, par exemple le mode de roulage sélectionné, l'état de charge de l'accumulateur 17, la vitesse du véhicule. Ces fonctions sont les opérations de contrôle des équipements de motorisation conventionnellement exécutées, par exemple pour le choix du démarrage et de l'arrêt du moteur thermique 11, du démarrage et d'arrêt de la machine de traction électrique 19, et du démarrage et d'arrêt du générateur 13. Ces opérations de contrôle commandent par exemple une phase de récupération d'énergie dans une descente ou un freinage, une phase d'accélération pour répondre à une forte demande ou un mode de roulage tout électrique imposé.

Par exemple, une consigne de récupération d'énergie CR peut être déterminée par la fonction de stratégie énergétique 24. La consigne de récupération CR commande un couple négatif à la machine de traction 19 et/ou au générateur électrique 13. La consigne de récupération est ensuite contrainte par la fonction de répartition 23 intégrée à la fonction de dépollution 22.

Les fonctions de stratégie énergétiques 24 peuvent imposer des limitations de couple ou des proportions de couple entre le train avant et arrière, par exemple pour des considérations de tenue de route. On notera que ces limitations ou proportions peuvent alors s'imposer à la consigne de couple C2 du moteur thermique 11 et aux consignes de couple C31 et C32 issues de la fonction de répartition 23 de la consigne d'assistance C3.

Le superviseur 20 opère également une fonction de répartition 23 (intégrée à la fonction de dépollution 22) de la consigne d'assistance C3 pour opérer le couple aux roues. Le couple aux roues de la consigne d'assistance C3 est réparti entre la machine de traction 19 et le générateur électrique 13 par une première consigne de couple C31 et une deuxième limite de consigne de couple C32 respectivement. En particulier, la consigne d'assistance C3 est opérée par la machine de traction 19 lorsqu'elle est positive, et lorsqu'elle est négative, la consigne d'assistance C3 impose une limite de récupération d'énergie à la consigne de récupération CR pouvant être opérée au moins par le générateur électrique 13 attelé au moteur thermique 11.

Lorsque le moteur thermique 11 est contraint en négatif par la fonction de dépollution 22, la machine de traction 19 est apte à fournir du couple positif aux roues en complément du couple aux roues du moteur thermique 11 et de façon indépendante. La consigne de couple C2 du moteur thermique 11 est ainsi compensée en couple positivement.

Lorsque le moteur thermique est contraint en positif par la fonction de dépollution 22, c'est à dire piloté pour fournir un couple supérieur au besoin aux roues, le générateur électrique est apte à prélever selon la consigne de récupération CR élaborée par la fonction de stratégie énergétique 24 et dans la limite de la consigne d'assistance C32 un couple négatif sur le couple généré par le moteur thermique 11. La consigne de couple C2 du moteur thermique 11 est ainsi compensée en couple négativement.

De plus, lorsque la consigne d'assistance C3 est négative et la consigne de récupération CR dépasse un potentiel de récupération de couple PR du générateur électrique 13, la quantité de couple résiduel de récupération dépassant le potentiel de récupération est opéré par la machine de traction 19. La machine de traction 19 est alors pilotée en couple négatif en complément du générateur électrique 13 pour opérer par exemple de la récupération d'énergie dans l'accumulateur 17, ou pour opérer uniquement un couple de freinage sur le train arrière. L'utilisation de la machine de traction 19 en complément du générateur 13 permet d'augmenter le potentiel de la consigne d'assistance C3 et donc le potentiel de dépollution.

La figure 3 représente une situation de roulage lorsque le moteur thermique 11 est contraint par la fonction de dépollution 22. En ordonnée des quantités de couple sont représentées en unité de Nm (Newton-Mètre) et en abscisse est représentée l'unité de temps. La figure 3 comprend un graphique supérieur représentant l'évolution de la consigne d'assistance C3, ainsi que le couple de prélèvement CPRIO constamment prélevé par le générateur électrique 13 pour alimenter le réseau de bord et également le seuil de récupération SR du générateur électrique 13. Le potentiel de couple PR est la différence entre le seuil de récupération et le couple de prélèvement CPRIO. Le potentiel de couple PR est la quantité de couple pouvant être répartie par la fonction de répartition 23 au générateur électrique 13 pour opérer la consigne d'assistance C3 lorsque celle-ci est négative.

La figure 3 comprend un graphique inférieur représentant les consignes de couple C31 (en trait plein), C32 (en trait pointillé) à destination de la machine de traction 19 et du générateur électrique 13 respectivement.

La situation de roulage comprend trois phases P1, P2, P3 de répartition de couple de la consigne d'assistance C3. Dans la première phase de répartition P1 la consigne d'assistance C3 est positive, le couple du moteur thermique 11 est donc limité. La consigne de couple C31 de la machine de traction 19 est alors positive et la consigne de couple C32 du générateur13 est nulle. La machine de traction 19 fournit donc un couple aux roues positif pour compenser entièrement la limitation de couple opérée sur le moteur thermique 11.

Dans une variante, si le véhicule hybride comprend deux machines de traction alternatives (ou plus) la consigne d'assistance peut être opérée par les deux machines de traction (ou plus).

Dans la deuxième phase de répartition P2, la consigne de couple C3 est négative, le couple du moteur thermique 11 est piloté pour fournir un couple supérieur ou égal au besoin aux roues dans la limite de la consigne C32. La consigne de couple C32 du générateur est alors négative et la consigne de couple C31 de la machine de traction est nulle. Durant la deuxième phase de répartition P2, le générateur 13 est apte à prélever la quantité de couple de la consigne de récupération CR dans la limite de la consigne d'assistance C3 en complément du couple de prélèvement CPRIO. La quantité de couple négatif du générateur électrique est inférieure au potentiel de prélèvement PR.

Dans la troisième phase de répartition P3, la consigne de couple C3 est négative et la quantité de couple de la consigne de récupération CR est supérieure au potentiel de récupération PR. Il est donc nécessaire de prélever du couple aux roues au delà des capacités du générateur électrique 13. Durant cette phase le moteur thermique 11 est contraint en positif et fournit au moins un couple aux roues supérieur au besoin du conducteur dans la limite de récupération C3. Durant la phase de répartition P3, la consigne de couple C31 de la machine de traction commande un couple négatif par une force de freinage et éventuellement une phase de récupération d'énergie.

On notera que lorsque la consigne d'assistance C3 est négative et opérée partiellement par la machine de traction 19 et partiellement par le générateur 13 (correspondant à la phase de répartition P3), les proportions de la répartition de la consigne d'assistance C3 entre la machine de traction 19 et le générateur 13 calculées par la fonction de dépollution 22 sont limitées par la fonction de répartition de couple 24 issue des fonctions de stratégie énergétique entre les premier et deuxième trains. Cette limitation par les fonctions de répartition de couple issues des fonctions 24 de stratégie énergétique du groupe motopropulseur permet notamment de garantir la stabilité du véhicule. En effet, des fonctions de répartition de couple issues de la stratégie énergétique prévoient une répartition de couple entre le train avant et le train arrière pour garantir la stabilité et la sécurité du roulage.

## Revendications

1. Procédé de répartition d'une consigne d'assistance de couple (C3) pour un groupe motopropulseur hybride (1) d'un véhicule automobile calculée par une fonction de dépollution (22) pour assister le couple opéré par un moteur thermique de traction (11) lorsqu'il est contraint par la fonction de dépollution, la consigne d'assistance (C3) étant opérée par une machine de traction (19) lorsqu'elle est positive, et lorsqu'elle est négative, la consigne d'assistance (C3) imposant une limite de récupération d'énergie à une consigne de récupération (CR) pouvant être opérée au moins par un générateur électrique (13) attelé au moteur thermique (11), **caractérisé en ce que** la machine de traction (19) est montée sur un premier train de roues du véhicule tandis que le moteur thermique (11) et le générateur (13) sont montés sur un deuxième train de roues, indépendant mécaniquement du premier train de roue, et lorsque la consigne d'assistance (C3) est négative et si la consigne de récupération (CR) est opérée partiellement par la machine de traction (19) et partiellement par le générateur (13), les proportions de la répartition de la consigne de récupération (CR) entre la machine de traction et le générateur calculées par la fonction de dépollution (22) sont limitées par une fonction de répartition (24) de couple entre les premier et deuxième trains.

2. Procédé selon la revendication 1, **caractérisé en ce que** lorsque la consigne d'assistance (C3) est négative et la consigne de récupération (CR) dépasse un potentiel de récupération de couple (PR) du générateur électrique (13), la quantité de couple résiduel de récupération dépassant le potentiel de récupération est opérée par la machine de traction (19).

3. Procédé selon la revendication 1 ou 2, **caractérisé en ce que** la consigne d'assistance (C3) est entièrement opérée par la machine de traction (19) lorsqu'elle est positive.

4. Procédé selon l'une quelconque des revendications 1 à 3, **caractérisé en ce que** la consigne d'assistance (C3) est calculée au moins en fonction de paramètres d'état (P2) d'un système de traitement des polluants générés par le moteur thermique (11).

5. Procédé selon l'une quelconque des revendications 1 à 4, **caractérisé en ce que** la machine de traction (19) est une machine électrique réversible.

6. Véhicule automobile comprenant un groupe motopropulseur hybride (1) piloté par un superviseur (20) apte à opérer une fonction de dépollution (22) commandant une consigne d'assistance de couple (C3) calculée par la fonction de dépollution pour assister le couple opéré par un moteur thermique de traction (11) lorsqu'il est contraint par la fonction de dépollution (22), **caractérisé en ce que** le superviseur exécute le procédé de répartition de la consigne d'assistance de couple selon l'une quelconque des revendication 1 à 5 lorsque le couple du moteur thermique est contraint par la fonction de dépollution.

## Patentansprüche

1. Verfahren zum Verteilen eines Drehmomentunterstützungssollwerts (C3) für einen Hybridantriebsstrang (1) eines Kraftfahrzeugs, der durch eine Schadstoffbeseitigungsfunktion (22) berechnet wird, um das von einem thermischen Traktionsmotor (11) betriebene Drehmoment zu unterstützen, wenn es durch die Schadstoffbeseitigungsfunktion eingeschrânkt wird, das Unterstützungssollwert (C3), der von einer Traktionsmaschine (19) betrieben wird, wenn er positiv ist, und wenn er negativ ist, wobei der Unterstützungssollwert (C3 ) einem Erholungssollwert (CR), der mindestens betrieben werden kann, eine Energierückgewinnungsgrenze auferlegt einen mit der Wârmekraftmaschine (11) gekoppelten elektrischen Generator (13), **dadurch gekennzeichnet, dass** die Traktionsmaschine (19) an einem ersten Radsatz des Fahrzeugs montiert ist, wâhrend die Wârmekraftmaschine (11) und der Generator (13) montiert sind auf einem zweiten Radsatz, mechanisch unabhângig vom ersten Radsatz, und wenn der Unterstützungssollwert (C3) negativ ist und wenn der Erholungssollwert (CR) 0 ist teilweise von der Traktionsmaschine (19) und teilweise vom Generator (13) erzeugt werden, werden die von der Entgiftungsfunktion (22) berechneten Anteile der Aufteilung des Rekuperationssollwerts (CR) zwischen der Traktionsmaschine und dem Generator durch ein Drehmoment begrenzt Verteilungsfunktion (24) zwischen dem ersten und dem zweiten Zug.

2. Verfahren nach Anspruch 1, **dadurch gekennzeichnet, dass**, wenn der Unterstützungssollwert (C3) negativ ist und der Wiederherstellungssollwert (CR) ein Momentenwiederherstellungspotential überschreitet(PR) des elektrischen Generators (13), wobei der Betrag des Wiederherstellungsrestdrehmoments, der das Wiederherstellungspotential übersteigt, durch die Traktionsmaschine (19) betrieben wird.

3. Verfahren nach Anspruch 1 oder 2, **dadurch gekennzeichnet, dass** der Assistenzbefehl (C3) im positiven Fall vollstândig von der Traktionsmaschine (19) bedient wird.

4. Verfahren nach einem der Ansprüche 1 bis 3, **dadurch gekennzeichnet, dass** der Unterstützungssollwert (C3) zumindest in Abhângigkeit von Zustandsparametern (P2) eines Systems zur Aufbereitung der von der Motorthermik (11) erzeugten Schadstoffe berechnet wird.

5. Verfahren nach einem der Ansprüche 1 bis 4, **dadurch gekennzeichnet, dass** die Traktionsmaschine (19) eine umkehrbare elektrische Maschine ist.

6. Kraftfahrzeug mit einem Hybridantriebsstrang (1), der von einem Überwacher (20) gesteuert wird, der in der Lage ist, eine Schadstoffbeseitigungsfunktion (22) zu betreiben, die einen Drehmomentunterstützungssollwert (C3) steuert, der von der Schadstoffbeseitigungsfunktion berechnet wird, um das von einem thermischen Traktionsmotor (11) betriebene Drehmoment zu unterstützen ), wenn es durch die Schadstoffbeseitigungsfunktion (22) eingeschrânkt ist, **dadurch gekennzeichnet, dass** der Überwacher das Verfahren zum Verteilen des Drehmomentunterstützungssollwerts nach einem der Ansprüche 1 bis 5 ausführt, wenn das Drehmoment des Verbrennungsmotors durch die Verschmutzungsbegrenzungsfunktion eingeschrânkt ist .

## Claims

1. Procédé de répartition d'une consigne d'assistance de couple (C3) pour un groupe motopropulseur hybride (1) d'un véhicule automobile calculée par une fonction de dépollution (22) pour assister le couple opéré par un moteur thermique de traction (11) lorsqu'il est contraint par la fonction de dépollution, la consigne d'assistance (C3) étant opérée par une machine de traction (19) lorsqu'elle est positive, et lorsqu'elle est négative, la consigne d'assistance (C3) imposant une limite de récupération d'énergie à une consigne de récupération (CR) pouvant être opérée au moins par un générateur électrique (13) attelé au moteur thermique (11), **caractérisé en ce que** la machine de traction (19) est montée sur un premier train de roues du véhicule tandis que le moteur thermique (11) et le générateur (13) sont montés sur un deuxième train de roues, indépendant mécaniquement du premier train de roue, et lorsque la consigne d'assistance (C3) est négative et si la consigne de récupération (CR) est opérée partiellement par la machine de traction (19) et partiellement par le générateur (13), les proportions de la répartition de la consigne de récupération (CR) entre la machine de traction et le générateur calculées par la fonction de dépollution (22) sont limitées par une fonction de répartition (24) de couple entre les premier et deuxième trains.

2. Procédé selon la revendication 1, **caractérisé en ce que** lorsque la consigne d'assistance (C3) est négative et la consigne de récupération (CR) dépasse un potentiel de récupération de couple(PR) du générateur électrique (13), la quantité de couple résiduel de récupération dépassant le potentiel de récupération est opérée par la machine de traction (19).

3. Method according to Claim 1 or 2, **characterized in that** the assistance instruction (C3) is entirely operated by the traction machine (19) when it is positive.

4. Method according to any one of Claims 1 to 3, **characterized in that** the assistance setpoint (C3) is calculated at least as a function of state parameters (P2) of a system for processing the pollutants generated by the engine thermal (11).

5. Method according to any one of Claims 1 to 4, **characterized in that** the traction machine (19) is a réversible electric machine.

6. Motor vehicle comprising a hybrid powertrain (1) controlled by a supervisor (20) able to operate a depollution function (22) controlling a torque assistance setpoint (C3) calculated by the depollution function to assist the torque operated by a thermal traction engine (11) when it is constrained by the depollution function (22), **characterized in that** the superviser executes the method for distributing the torque assistance setpoint according to any one of claims 1 to 5 when the torque of the combustion engine is constrained by the pollution control function.
